# EUROPEAN PATENT SPECIFICATION

(11) **EP 4 353 793 B1**
(45) Date of publication and mention of the grant of the patent: **14.05.2025**
(21) Application number: 22837633.1
(22) Date of filing: 04.07.2022
(51) Int. Cl.: C09J 11/06, C09J 153/02, C09J 7/38

(54) **ADHESIVE TAPE**
KLEBEBAND
RUBAN ADHÉSIF

(30) Priority: 09.07.2021 JP 2021114312; 24.03.2022 JP 2022048279
(43) Date of publication of application: 17.04.2024
(73) Proprietor: Denka Company Limited, Tokyo 103-8338 (JP)
(72) Inventor: KIMURA, Akiyoshi, Tokyo 103-8338 (JP); YAMAMOTO, Yoshiaki, Tokyo 103-8338 (JP); YOSHIMURA, Daisuke, Tokyo 103-8338 (JP)
(74) Representative: Gulde & Partner
(86) International application number: PCT/JP2022/026547
(87) International publication number: WO 2023/282217

(56) References cited:
- WO-A1-2015/068610
- WO-A1-2021/065662
- JP-A- 2013 216 852
- JP-A- 2016 060 847
- JP-A- 2017 186 487
- JP-A- H0 195 175
- JP-A- S56 163 174
- US-A1- 2013 244 013

## Description

### Technical Field

The present invention relates to an adhesive tape.

### Background Art

In various industrial fields such as home appliances, automobiles, and construction, adhesive tapes are used, for example, to join various assembly parts.

Acryl-based adhesives and rubber-based adhesives are cited as examples of an adhesive used for the adhesive tape, and the acryl-based adhesives are widely used. However, the acryl-based adhesives do not have sufficient adhesive force to an olefin-based material.

As a rubber-based adhesive, disclosed in Patent Literature 1 is an adhesive composition containing a base polymer consisting of a block copolymer of a monovinyl-substituted aromatic compound and a conjugated diene compound, and an adhesion-imparting resin (TH) with a hydroxyl value of 80 mgKOH/g or higher.

In addition, disclosed in Patent Literature 2 is a hot melt composition containing a styrene-based block copolymer (A) and a liquid softener (B), in which the styrene-based block copolymer (A) is a hydrogenated styrene-based thermoplastic elastomer, the hot melt composition has a viscosity ratio (η1/η2) where η1 is a melt viscosity at 140°C and η2 is a melt viscosity 180°C, and the melt viscosity at 180°C is in a specific range.

Further, disclosed in Patent Literature 3 is a hot melt adhesive, comprising a styrene-based thermoplastic elastomer A, an adhesion-imparting resin B, a plasticizer C, and a vinyl copolymer D having an ethylene-carbonyl bond, in which a ratio represented by D/C is 0.10 to 0.80, where C is parts by mass of the plasticizer C, and D is parts by mass of the vinyl copolymer D having the ethylene-carbonyl bond. Moreover, Patent Literature 4 discloses a double-faced pressure-sensitive adhesive sheet comprising a foam substrate, pressure sensitive adhesive layers provided on a first face and a second face of the foam substrate, and having an overall thickness of 400 µm or smaller. At least one of the pressure-sensitive adhesive layers is constituted with a rubber-based pressure-sensitive adhesive comprising, as a base polymer, a block copolymer of a mono-vinyl-substituted aromatic compound and a conjugated diene compound. Patent Literature 5 relates to a hot melt adhesive composition, including: a styrene-based block copolymer; a tackifier; and a plasticizer; wherein: the styrene-based block copolymer is a styrene-butadiene block copolymer and a butadiene portion thereof is partially hydrogenated; the tackifier is contained by 65 to 190 parts by mass with respect to 100 parts by mass of the styrene-based block copolymer; and the plasticizer is contained by 0.1 to 24 parts by mass with respect to 100 parts by mass of the styrene-based block copolymer.

### Citation List

### Patent Literature

[Patent Literature 1] JP-A-2013-216853
[Patent Literature 2] JP-A-2019-116608
[Patent Literature 3] JP-A-2020-203977
[Patent Literature 4] US 2013/0244013 A1
[Patent Literature 5] WO 2021/065662 A1

### Summary of Invention

### Technical Problem

Conventional rubber-based adhesives may show high adhesive force to a material that is difficult to be adhered with an acryl-based adhesive, such as an olefin-based material. However, adhesive force may decrease at a high temperature, resulting in insufficient heat resistance. In addition, since the mainstream of the method for producing conventional adhesive tapes was the method comprising a step of applying an adhesive composition in which an adhesive is dissolved in a medium such as a solvent and water to a base material and then volatilizing the solvent or water, the large amounts of energy and cost were required for production, leading to long production time. Therefore, an adhesive composition that has a low melt viscosity at a high temperature and can be sufficiently applied, for example, by various hot-melt methods, has been desired.

The present invention has been made by taking such circumstances into consideration, and aims to provide an adhesive tape having holding force to an olefin-based material at a high temperature and having high adhesive force, the holding force being difficult to achieve with a conventional adhesive tape using a rubber-based adhesive.

### Solution to Problem

According to the present invention, provided is an adhesive tape comprising an adhesive layer containing an adhesive composition, wherein: the adhesive composition contains a styrene-butadiene-based block copolymer, a first tackifier, a second tackifier, and a third tackifier; a butadiene portion of the styrene-butadiene-based block copolymer is partially hydrogenated; the first tackifier is at least one of a rosin ester which is liquid at 23°C and a terpene-based resin which is liquid at 23°C; the second tackifier has a softening point of 70 to 120°C, measured in accordance with the softening point test method (ring and ball method) stipulated in JIS K5902 and JIS K2207; the third tackifier has a softening point of 140°C or higher; holding force of the adhesive tape at 70°C based on JISZ0237 is 100 minutes or more; a melt viscosity of the adhesive composition at 200°C is 100000 mPa.s (cp) or lower, measured using a rheometer at 200°C and at a shear rate of 10 (1/s); a content of the styrene-butadiene-based block copolymer is 45 to 55 parts by mass; a content of the first tackifier is 5 to 15 parts by mass; a content of the second tackifier is 10 or more parts by mass; and a total content of the second tackifier and the third tackifier is 30 to 50 parts by mass, per 100 parts by mass of the adhesive composition.

The inventors have conducted intensive studies, and have found that, in an adhesive tape comprising an adhesive layer containing an adhesive composition, the adhesive tape having sufficiently high holding force and adhesive force can be obtained by blending a styrene-butadiene-based block copolymer in which a butadiene portion is partially hydrogenated, a first tackifier, a second tackifier, and a third tackifier to the adhesive composition, each tackifier having specific properties, and by adjusting holding force of the adhesive tape and a viscosity of the adhesive composition at a high temperature, thereby leading to the completion of the present invention.

Hereinafter, various embodiments of the present invention are exemplified. The following embodiments can be combined with each other.

According to one embodiment of the invention the second tackifier may contain a terpene-based resin.

According to one embodiment of the invention the third tackifier may contain a rosin-based resin or a terpene-based resin.

According to a further embodiment of the invention the adhesive tape has adhesive force at 80°C to a polypropylene resin based on JISZ0237 is 2.40 N/cm or higher.

### Advantageous Effects of Invention

According to the adhesive tape of the present invention, an adhesive tape having adhesive force to an olefin-based material at a high temperature and having holding force at a high temperature can be obtained. The adhesive tape according to the present invention has a low melt viscosity at a high temperature, and the adhesive tape comprising the adhesive later containing the adhesive composition which can be sufficiently applied by various hot-melt methods, for example. The adhesive tape according to the present invention can be used in various industrial fields such as home appliances, automobiles, and construction, to adhere various components to each other more reliably and at lower cost by taking advantage of its characteristics. Because of the above-mentioned features, the adhesive tape according to one embodiment of the present invention can be preferably used, for example, to fix parts around doors, ceilings, trunk rooms, and instrument panels of automobiles, to fix interior parts in the automotive field such as assembly around air conditioners and car navigation systems, and for office automation equipment and home appliances.

### Brief Description of Drawings

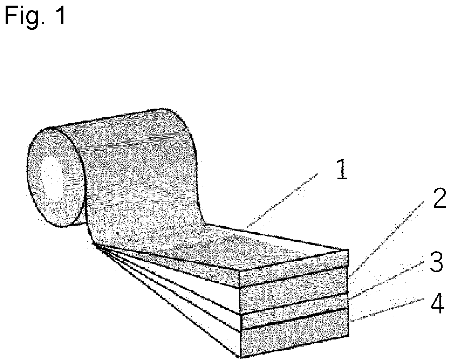

Fig. 1 is a schematic drawing of the adhesive tape according to one embodiment of the present invention.

### Description of Embodiments

Hereinafter, the embodiments of the present invention are exemplified to explain the details of the present invention. The present invention is not limited at all by these descriptions. Various distinctive features shown in the following embodiments can be combined with each other. In addition, an invention can be established independently for each of the distinctive features.

### 1. Adhesive Composition

The adhesive tape according to the present invention comprises an adhesive layer containing an adhesive composition. The adhesive composition according to the present invention contains a styrene-butadiene-based block copolymer, a first tackifier, a second tackifier, and a third tackifier.

In the present invention, tackifier refers to an adhesion-imparting agent, which is a thermoplastic resin added to enhance adhesiveness indicating that it is liquid or solid at normal temperature. Specific examples of the tackifier include rosin-based, terpene-based, and petroleum-based tackifiers.

### 1.1 Styrene-butadiene-based Block Copolymer

The styrene-butadiene-based block copolymer according to the present invention means a block copolymer containing a block having a styrene-derived monomer unit and a block having a butadiene-derived monomer unit. One kind of the styrene-butadiene-based block copolymer can be used alone, or two or more kinds of the block copolymers having different styrene-derived monomer unit content or different diblock copolymer content can also be used in combination.

The styrene-derived monomer unit content of the styrene-butadiene-based block copolymer is preferably 5 to 50 mass%, and more preferably 10 to 40 mass%. The styrene-derived monomer unit content is, specifically for example, 5, 10, 15, 20, 25, 30, 35, 40, 45, or 50 mass%, and may be in the range between the two values exemplified herein. By making the styrene-derived monomer unit content within such a range, the obtained adhesive tape will have moderate adhesive force and holding force. The styrene-derived monomer unit content can be measured based on JIS K6383.

The styrene-butadiene-based block copolymer according to the present invention has a butadiene portion partially hydrogenated. Preferably, 20 to 90 mass% of the butadiene portion of the styrene-butadiene-based block copolymer is hydrogenated, and more preferably, 30 to 80 mass% of the butadiene portion of the styrene-butadiene-based block copolymer is hydrogenated.

Specific examples of the styrene-butadiene-based block copolymer having the butadiene portion partially hydrogenated include styrene-butadiene-butylene-styrene block copolymers (SBBS).

The styrene-butadiene-based block copolymer according to the present invention preferably contains a triblock copolymer containing: a block A containing the styrene-derived monomer unit; a block B containing the butadiene-derived monomer unit; and a block C containing the styrene-derived monomer unit.

In addition, the styrene-butadiene-based block copolymer according to the present invention preferably contains a diblock copolymer containing: the block A containing the styrene-derived monomer unit; and the block B containing the butadiene-derived monomer unit.

Here, it is preferable that the block B containing the butadiene-derived monomer unit be partially hydrogenated. In other words, the block B containing the butadiene-derived monomer unit preferably has a butadiene block and a butylene block.

The styrene-butadiene-based block copolymer according to the present invention preferably contains 50 to 85 mass%, and more preferably contains 55 to 80 mass% of the above-mentioned diblock copolymer, per 100 mass% of the styrene-butadiene-based block copolymer. The content of the above-mentioned diblock copolymer is, specifically for example, 50, 55, 60, 65, 70, 75, 80, or 85 mass%, and may be in the range between the two values exemplified herein. By making the content of the diblock copolymer within the above-mentioned range, the adhesive composition having moderate tack can be obtained. In the present invention, one kind of the styrene-butadiene-based block copolymer used for an adhesive may be used alone, or two or more kinds of the styrene-butadiene-based block copolymers may also be used in combination. By appropriately selecting resins with different viscosities and styrene contents, the adhesive force and melt viscosity can be adjusted to appropriate ranges.

The weight average molecular weight of the styrene-butadiene-based block copolymer is not particularly limited. For example, the weight average molecular weight is preferably 30000 to 500000, and more preferably 60000 to 300000. The weight average molecular weight can be determined by a gel permeation chromatography (GPC) method.

### 1.2 First Tackifier

The first tackifier according to the present invention is at least one of a rosin ester which is liquid at 23°C and a terpene-based resin which is liquid at 23°C. As the first tackifier, one kind of the rosin ester which is liquid at 23°C or the terpene-based resin which is liquid at 23°C can be used alone, or two or more kinds of these can be used in combination.

As examples of such a liquid rosin ester, Super Ester A-18, Ester Gum AT, and the like are available from ARAKAWA CHEMICAL INDUSTRIES, LTD., and can be freely selected and used. In particular, the terpene-based resin can be preferably used because it reduces the viscosity in coating but does not reduce holding force. As examples of such a terpene-based resin, Daimaron (liquid terpene resin, flash point: 174°C), YS Resin CP (liquid terpene resin, flash point: 178°C), YS Resin PX300N (terpene resin, flash point: 202°C), YS Polyster T30 (terpene phenolic resin, flash point: 205°C), and YS Resin LP (aromatic modified terpene resin, flash point: 220°C) are commercially available from YASUHARA CHEMICAL CO., LTD., and can be freely selected and used. Among these, YS Resin LP can be preferably used because of its high flash point, low heating loss, and high compatibility with the styrene-butadiene-based block copolymer according to the present invention.

The viscosity at 25°C of the first tackifier is preferably 500 to 150000 mPa.s (cp), and more preferably 1000 to 100000 cp. The viscosity at 25°C is, for example, 500, 1000, 2000, 5000, 10000, 20000, 50000, 100000, 120000, or 150000 mPa.s (cp) and may be in the range between the two values exemplified herein.

### 1.3 Second tackifier

The softening point of the second tackifier is 70 to 120°C. As the second tackifier, the one having a softening point of 70 to 120°C can be used alone, or two or more of the ones having a softening point of 70 to 120°C can be used in combination.

The softening point of the second tackifier is preferably 80 to 120°C, and more preferably 85 to 115°C.

The softening point is, specifically for example, 70, 75, 80, 85, 90, 95, 100, 105, 110, 115, or 120°C, and may be in the range between the two values exemplified herein.

As the second tackifier, C9 petroleum resins, hydrogenated C9 petroleum resins, C5 petroleum resins, alicyclic petroleum resins, alicyclic/aromatic petroleum resins, rosin-based resins (polymerized rosin esters, modified polymerized rosin esters, stabilized rosin esters, etc.), and terpene-based resins (terpene resins, aromatic modified terpene resins, terpene phenolic resins, hydrogenated terpene phenolic resins, etc.) can be used. In the present invention, the second tackifier is preferably at least one selected from the terpene-based resins because of their good holding force. From the viewpoint of imparting good tack, the second tackifier preferably contains a terpene resin.

### 1.4 Third Tackifier

The softening point of the third tackifier is 140°C or higher. As the third tackifier, the one having a softening point of 140°C or higher can be alone, or two or more of the ones having a softening point of 140°C can be used in combination.

The softening point of the third tackifier is preferably 140 to 180°C, and more preferably 140 to 170°C.

The softening point is, specifically for example, 140, 145, 150, 155, 160, 165, 170, 175, or 180°C, and may be in the range between the two values exemplified herein.

The softening point of tackifier can be defined as the value measured in accordance with the softening point test method (ring and ball method) stipulated in JIS K5902 and JIS K2207. Specifically, the sample is promptly melted at as low a temperature as possible and filled into a ring placed on a flat metal plate, taking care to avoid the formation of bubbles. After cooling, a slightly heated knife is used to cut off the portion protruding from the plane including the upper end of the ring. Next, a support (ring base) is placed in a glass container (heating bath) having a diameter of 85 mm or more and a height of 127 mm or more, and glycerin is poured until its depth becomes 90 mm or more. Next, a steel ball (9.5 mm in diameter, 3.5 g in weight) and the ring filled with the sample are immersed in the glycerin such that they do not touch each other, and the temperature of the glycerin is maintained at 20±5°C for 15 minutes. The steel ball is then placed on the center of the surface of the sample in the ring, and this is placed in a fixed position on the support. Next, the distance from the upper end of the ring to the glycerin surface is kept at 50 mm, a thermometer is placed, the center of the mercury sphere of the thermometer is positioned at the same height as the center of the ring, and the container is heated. The flame of the Bunsen burner used for heating is made in contact with the intermediate portion between the center and the edge of the container bottom for uniform heating. The rate of increase in the bath temperature after it reaches 40°C starting from the heating can be 5.0±0.5°C per minute. The temperature at which the sample gradually softens, flows down from the ring, and finally comes in contact with the bottom plate can be read as the softening point. Two or more softening point measurements can be made at the same time, and the average value thereof can be adopted.

In addition, since the softening point is approximately 50°C above the glass transition point of the tackifier, the softening point can be inferred by detecting Tg using a DSC (differential scanning calorimeter). As the method for identifying the softening point of the tackifier using this technique, there is a method in which the tackifier component in the adhesive is isolated using preparative HPLC, and the Tg was measured from the DSC measurement result of the isolated sample to infer the softening temperature.

Examples of the third tackifier include C9 petroleum resins, hydrogenated C9 petroleum resins, C5 petroleum resins, alicyclic petroleum resins, alicyclic/aromatic petroleum resins, terpene-based resins (terpene resins, aromatic modified terpene resins, terpene phenolic resins, hydrogenated terpene phenolic resin, etc.), rosin-based resins (polymerized rosin esters, modified polymerized rosin esters, stabilized rosin esters, etc.), and alkyl phenol compounds. From the viewpoint of excellent balance between the melt viscosity and adhesive force at a high temperature, the third tackifier preferably contains the rosin-based resin or the terpene-based resin, and more preferably contains the rosin-based resin or the terpene phenolic resin. From the viewpoint of having a high softening point and good compatibility with a styrene-based elastomer, the third tackifier can contain the polymerized rosin ester. The third tackifier can also contain the hydrogenated C9 petroleum resin, the C5 petroleum resin, or the terpene-based resin. From the viewpoint of cost, the hydrogenated C9 petroleum resin and the C5 petroleum resin are preferred. Compared to other petroleum resins, the hydrogenated C9 petroleum resin is preferred from the viewpoint of less odor. From the viewpoint of capability of obtaining the adhesive composition that has a low melt viscosity and is easily applied, the terpene phenolic resin is preferred.

### 1.5 Content of Each Component

The adhesive composition according to one embodiment of the present invention must contain the styrene-butadiene-based block copolymer, the first tackifier, the second tackifier, and the third tackifier. In addition, the adhesive composition according to one embodiment of the present invention is not particularly limited in terms of the contents of each component, as long as the holding force of the adhesive tape comprising the adhesive layer composed of the adhesive composition and the melt viscosity of the adhesive composition are adjusted within the ranges described below. As for the adhesive composition according to one embodiment of the present invention, albeit depending on the kind of each component, the holding force of the adhesive tape and the melt viscosity of the adhesive composition can be more easily adjusted and the adhesive force of the adhesive tape can be easily controlled by making the contents of each component within the ranges described below, for example.

The adhesive composition according to the present invention contains 45 to 55 parts by mass of the styrene-butadiene-based block copolymer, per 100 parts by mass of the adhesive composition. The content of the styrene-butadiene-based block copolymer is, specifically for example, 45, 46, 47, 48, 49, 50, 51, 52, 53, 54, or 55 parts by mass, and may be in the range between the two values exemplified herein.

The adhesive composition according to the present invention contains 5 to 15 parts by mass of the first tackifier, per 100 parts by mass of the adhesive composition. The content of the first tackifier is, specifically for example, 5, 6, 7, 8, 9, 10, 11, 12, 13, 14, or 15 parts by mass, and may be in the range between the two values exemplified herein.

The adhesive composition according to one embodiment of the present invention preferably contains 10 or more parts by mass, more preferably 10 to 40 parts by mass, and even more preferably 15 to 25 parts by mass of the second tackifier, per 100 parts by mass of the adhesive composition. The content of the second tackifier is, specifically for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40 parts by mass, and may be in the range between the two values exemplified herein.

The adhesive composition according to one embodiment of the present invention preferably contains 30 to 50 parts by mass of the total of the second tackifier and the third tackifier, per 100 parts by mass of the adhesive composition. The content of the second tackifier and the third tackifier is, for example, 30, 31, 32, 33, 34, 35, 36, 37, 38, 39, 40, 41, 42, 43, 44, 45, 46, 47, 48, 49, or 50 parts by mass, and may be in the range between the two values exemplified herein.

The adhesive composition according to one embodiment of the present invention preferably contains 10 to 30 parts by mass, and more preferably 15 to 25 parts by mass of the third tackifier, per 100 parts by mass of the adhesive composition. The content of the third tackifier is, specifically for example, 10, 11, 12, 13, 14, 15, 16, 17, 18, 19, 20, 21, 22, 23, 24, 25, 26, 27, 28, 29, or 30 parts by mass, and may be in the range between the two values exemplified herein.

The adhesive composition according to the present invention contains 45 to 55 parts by mass of the styrene-butadiene-based block copolymer, 5 to 15 parts by mass of the first tackifier, 10 or more parts by mass of the second tackifier, and 30 to 50 parts by mass of the total of the second tackifier and the third tackifier, per 100 parts by mass of the adhesive composition. Preferably, the adhesive composition according to one embodiment of the present invention contains 45 to 55 parts by mass of the styrene-butadiene-based block copolymer, 5 to 15 parts by mass of the first tackifier, 10 or more parts by mass of the second tackifier, 10 or more parts by mass of the third tackifier, and 30 to 50 parts by mass of the total of the second tackifier and the third tackifier, per 100 parts by mass of the adhesive composition. In addition, even more preferably, the adhesive composition according to one embodiment of the present invention contains 45 to 55 parts by mass of the styrene-butadiene-based block copolymer, 5 to 15 parts by mass of the first tackifier, 10 to 40 parts by mass of the second tackifier, and 10 to 30 parts by mass of the third tackifier, per 100 parts by mass of the adhesive composition.

By making the contents of each component of the adhesive composition according to one embodiment of the present invention within the above-described numerical ranges, the holding force and the adhesive force of the adhesive tape are more appropriately adjusted and the melt viscosity at 200°C of the adhesive tape becomes lower.

### 1.6 Other Components

In addition to the above-described components, the adhesive composition according to the present invention may contain various additives such as plasticizers, antioxidants, ultraviolet absorbers, stabilizers, fillers, modifiers, and the like to the extent that the effect of the present invention is not hindered.

### (Plasticizer)

The adhesive composition according to one embodiment of the present invention can contain a plasticizer. The adhesive composition according to one embodiment of the present invention preferably contains less than 4 parts by mass of the plasticizer, per 100 parts by mass of the adhesive composition. The content of the plasticizer is, specifically for example, 0.5, 1.0, 1.5, 2.0, 2.5, 3.0, or 3.5 parts by mass, and may be in the range between the two values exemplified herein. The adhesive composition according to one embodiment of the present invention may not contain the plasticizer.

The adhesive composition according to one embodiment of the present invention has the styrene-butadiene-based block copolymer, the first tackifier, the second tackifier, and the third tackifier, and the blending amounts thereof are adjusted such that the holding force of the adhesive tape and the melt viscosity of the adhesive composition becomes appropriate, thereby leading to the adhesive tape having an excellent balance of the holding force thereof, the adhesive force thereof, and the melt viscosity at 200°C of the adhesive composition even when less or no plasticizer is contained.

Examples of the plasticizer include phthalic acid ester-based plasticizers, polybutene, paraffin-based process oils, naphthene-based process oils, aromatic process oils, liquid paraffin, and hydrocarbon-based synthetic oils.

Examples of the polybutene include homopolymers of isobutene, and copolymers of isobutene and n-butene. Examples of commercially available products of polybutene include "10N" made by Nippon Oil & Fats Co., Ltd., "Indopol H-100" made by Ineos, "Nisseki polybutene" made by Shin Nihon Oil Co., Ltd., and "Tetrax" made by Shin Nihon Oil Co., Ltd.

Examples of the paraffin-based process oil include "PW-32" made by Idemitsu Kosan Co., Ltd., "Diana Fresia S-32" made by Idemitsu Kosan Co., Ltd., and "PS-32" made by Idemitsu Kosan Co., Ltd.

Examples of the naphthene-based process oil include "KN4010" made by PetroChina Company Limited, "Diana Fresia N28" made by Idemitsu Kosan Co., Ltd., "Diana Fresia N90" made by Idemitsu Kosan Co., Ltd., "Diana Fresia U46" made by Idemitsu Kosan Co., Ltd., and "Diana Process Oil NR" made by Idemitsu Kosan Co., Ltd.

Examples of the aromatic process oil include "Aromax" manufactured by Shin Nihon Oil Co., Ltd.

Examples of the liquid paraffin include "P-100" made by MORESCO Corporation, and "Kaydol" made by Sonneborn LLC.

Examples of the hydrocarbon-based synthetic oil include "LUCANT HC-10" made by Mitsui Chemicals, Inc. and "LUCANT HC-20" made by Mitsui Chemicals, Inc.

Examples of the phthalic acid ester-based plasticizer include DINA (diisononyl adipate), DEHP (di-(2-ethylhexyl) phthalate), DBP (dibutyl phthalate), BBP (butyl benzyl phthalate), DINP (diisononyl phthalate), DIDP (diisodecyl phthalate) and DNOP (dinormal octyl phthalate).

As for the adhesive composition according to one embodiment of the present invention, the total content of the above-exemplified plasticizers is preferably within the above-described numerical range. In addition, as for the adhesive composition according to one embodiment of the present invention, in particular, the total content of phthalic acid ester-based plasticizers is preferably within the above-described numerical range.

### (Antioxidant and Ultraviolet Absorber)

Examples of the antioxidant include phenol-based antioxidants such as 2,6-di-t-butyl-4-methylphenol, n-octadecyl-3-(4'-hydroxy-3',5'-di-t-butylphenyl) propionate, 2,2'-methylene bis(4-methyl-6-t-butylphenol), 2,2'-methylene bis(4-ethyl-6-t-butylphenol), 2,4-bis(octylthiomethyl)-o-cresol, 2-t-butyl-6-(3-t-butyl-2-hydroxy -5-methylbenzyl)-4-methylphenyl acrylate, 2,4-di-t-amyl-6-[1-(3,5-di-t-amyl-2-hydroxyphenyl)ethyl] phenyl acrylate, 2-[1-(2-hydroxy-3,5-di-tert-pentylphenyl)]acrylate, tetrakis[methylene-3-(3,5-di-tert-butyl-4-hydroxyphenyl)propionate methane, and 2,4-bis[(dodecylthio)methyl]-6-methylphenol; sulfur-based antioxidants such as dilaurylthiodipropionate, laurylstearylthiodipropionate, and pentaerythritol tetrakis(3-laurylthiopropionate); phosphorus-based antioxidants such as tris(nonylphenyl)phosphite and tris(2,4-di-t-butylphenyl)phosphite; and lactone-based antioxidants. Examples of the ultraviolet absorber include benzotriazole-based ultraviolet absorbers such as 2-(2'-hydroxy-5'-methylphenyl)benzotriazole, 2-(2'-hydroxy-3',5'-di-t-butylphenyl)benzotriazole, and 2-(2'-hydroxy-3',5'-dit-butylphenyl)-5-chlorobenzotriazole; benzophenone-based ultraviolet absorbers such as 2-hydroxy-4-methoxybenzophenone; salicylic acid ester-based ultraviolet absorbers; cyanoacrylate-based ultraviolet absorbers; and hindered amine-based light stabilizers. These can be used alone or in combination.

### (Filler)

The filler is not particularly limited. Examples of the filler include calcium carbonate, kaolin, talc, titanium oxide, mica, styrene beads, and silica. These fine particle fillers can be used alone, or can be mixed and used.

### 1.7 Melt Viscosity at 200°C

The adhesive composition according to one embodiment of the present invention must have a melt viscosity of 100000 cp or lower at 200°C for hot melt coating. In addition, the melt viscosity at 200°C is preferably 20000 cp or higher and 90000 or lower.

The melt viscosity at 200°C is, specifically for example, 20000, 30000, 40000, 50000, 60000, 70000, 80000, 90000, or 100000 mPa.s (cp), and may be in the range between the two values exemplified herein.

The melt viscosity at 200°C can be controlled by appropriately selecting the adhesive composition blending and adjusting the blending amount thereof.

The melt viscosity of the adhesive composition can be measured using a rheometer at 200°C and at a shear rate of 10 (1/s).

### 1.8 Production Method

The production method of the adhesive composition according to one embodiment of the present invention is not particularly limited. For example, the production method of the adhesive composition according to one embodiment of the present invention can include a step of kneading tackifiers and the like in which raw materials including the first tackifier, the second tackifier, and the third tackifier are kneaded in a kneader. The antioxidant or the plasticizer can also be further added in the above-described step.

In the step of kneading tackifiers and the like, for example, kneading can be performed for 3 to 30 minutes at 5 to 25 rpm.

The production method of the adhesive composition according to one embodiment of the present invention preferably include a step of adding and kneading the styrene-butadiene-based block copolymer in which the styrene-butadiene-based block copolymer is further added and kneaded after the above-described step of kneading tackifiers and the like. In the step of adding and kneading the styrene-butadiene-based block copolymer, for example, kneading can be performed for 20 to 200 minutes at 5 to 25 rpm.

### 2. Adhesive Layer and Adhesive Tape

The adhesive tape according to the present invention comprises an adhesive layer containing the above-described adhesive composition.

The adhesive layer is formed by heating and melting the adhesive composition by a melter, for example, and coating the base material with it. The coating method is not particularly limited. Preferably, the raw materials of the adhesive composition are heated, melted, and kneaded to apply it by a hot-melt method. In other words, the production method of the adhesive tape according to one embodiment of the present invention preferably includes a coating step in which the above-described adhesive composition is applied to a base material by a hot-melt method.

Since conventional adhesive tapes for the automotive field and the like had a step of applying an adhesive composition in which an adhesive is dissolved in a medium such as solvent or water to a base material and then volatilizing the solvent or water, large amounts of energy and cost were required for production, leading to long production time. Since the adhesive composition according to the present invention has a low viscosity at high a temperature and coating by the hot-melt method can be performed, it is possible to produce the adhesive tape with less energy and cost and in shorter time.

As a coating method, a non-contact coating method or a contact method can be employed. Examples of the non-contact coating method include cross coating. Examples of the contact method include slot die coating.

The thickness of the adhesive layer is not particularly limited, and is preferably 40 to 100 µm. The thickness of the adhesive layer is, specifically for example, 40, 50, 55, 60, 65, 70, 75, 80, 85, 90, 95, or 100 µm, and may be in the range between the two values exemplified herein. With the conventional solvent-based adhesive composition, when a thick adhesive layer is formed, the drying step becomes longer depending on the thickness, resulting in increases in energy and cost required. However, since the adhesive composition according to the present invention has a specific range of viscosity at a high temperature and coating by the hot-melt method can be performed, it is possible to produce the relatively thick adhesive layer with less energy and cost and in shorter time than the conventional adhesive composition.

Preferably, the adhesive tape according to the present invention is a double-sided tape having the adhesive layers on both surfaces of the nonwoven fabric. More preferably, the adhesive tape according to the present invention has the adhesive layers with the above-described thickness on both surfaces of the nonwoven fabric.

The configuration of the adhesive tape according to one embodiment of the present invention is shown in Fig. 1. The adhesive tape has an adhesive layer 2 and an adhesive layer 4 on both surfaces of a nonwoven fabric 3. A double-sided release film 1 is attached to the surface of the adhesive layer 2 opposite to the surface in contact with the nonwoven fabric.

### 2.1 Adhesive Force

As for the adhesive tape according to the present invention, the adhesive force at 80°C to a polypropylene resin based on JIS Z0237 is preferably 2.40 N/cm or higher, more preferably 3.00 N/cm or higher, and even more preferably 3.50 N/cm or higher. The adhesive force is, specifically for example, 2.40, 2.50, 2.60, 2.70, 2.80, 2.90, 3.00, 3.50, 4.00, 4.50, 5.00, 5.50, 6.00, 6.50, 7.00, 7.50, 8.00, 8.50, 9.00, 9.50, or 10.00 N/cm, and may be in the range between the two values exemplified herein.

The adhesive force can be controlled by adjusting the kind and amount of the adhesive composition blending, particularly by adjusting the kind and amount of the adhesive composition blending such that the holding force of the adhesive tape and the melt viscosity of the adhesive composition each become within specific numerical ranges. The adhesive force can be determined by measuring the 180° peel adhesive force to a polypropylene resin under an atmosphere at 80°C based on JIS Z0237 "10. Adhesive Force".

### 2.2 Holding Force

As for the adhesive tape, the holding force at 70°C based on JIS Z0237 is 100 minutes or more, and more preferably 150 minutes or more. The holding force is, specifically for example, 100, 150, 200, 250, 300, 350, 400, 450, 500, 550, 600, 650, 700, 750, 800, 850, 900, 950, 1000, 1050, 1100, 1150, 1200, 1250, or 1300 minutes, and may be in the range between the two values exemplified herein. The folding force can be controlled by adjusting the kind and amount of the adhesive composition blending. The holding force can be evaluated by attaching the adhesive tape to an SUS plate with an area of 25 mm × 25 mm under an atmosphere at 70°C based on JIS Z0237 "13. Holding Force" and measuring the time until the weight drops with a load of 1 kg.

The adhesive tape according to the present invention has high adhesion force and high holding force to an olefin-based material such as polypropylene at a high temperature. Furthermore, it has a low viscosity at a high temperature and coating by the hot-melt method can be performed. Therefore, it is possible to produce the adhesive tape with less energy and cost and in a shorter time. By taking advantage of these characteristics, the adhesive tape according to the present invention can be used in various industrial fields such as home appliances, automobiles, and construction, to adhere various components to each other more reliably and at lower cost. The adhesive tape according to one embodiment of the present invention can be preferably used, for example, to fix parts around doors, ceilings, trunk rooms, and instrument panels of automobiles, to fix interior parts in the automotive field such as assembly around air conditioners and car navigation systems, and for office automation equipment and home appliances.

### Example

Hereinafter, the present invention will be explained in further detail based on Examples. The present invention is not construed as limited thereto.

### (Preparation of Adhesive Composition)

The temperature of the kneader (made by Toshin Co., Ltd.) was raised to 200°C in advance. The first tackifier, the second tackifier, the third tackifier, the antioxidant, and the plasticizer were added to the kneader and kneaded at 15 rpm for 10 minutes. Then, the styrene-butadiene-based block copolymer with the butadiene portion partially hydrogenated was added and further kneaded at 15 rpm for 100 minutes to obtain the adhesive compositions 1 to 27. The blending amounts (parts by mass) of each component are shown in Tables 1 and 2. It should be noted that the viscosity of the first tackifier in the tables is the viscosity at 25°C.

The softening points and the like of the components used as the second tackifier are shown below.
Alcon P-110 (made by ARAKAWA CHEMICAL INDUSTRIES, LTD.): fully hydrogenated C9, softening point of 110±5°C
PX1150N (made by YASUHARA CHEMICAL CO., LTD.): terpene resin, softening point of 115±5°C
Petrotack 90 (Tosoh Corporation): C5/C9, softening point of 95°C
ESCOREZ 1310 (made by Exxon Mobil Corporation): C5, softening point of 88 to 98°C

The softening points and the like of the components used as the third tackifier are shown below.
QUINTONE 2940 (made by ZEON Corporation): C5, softening point of 141°C
P-140 (made by ARAKAWA CHEMICAL INDUSTRIES, LTD.): hydrogenated C9, softening point of 140°C
T-145 (made by YASUHARA CHEMICAL CO., LTD.): terpene phenolic resin, softening point of 145°C
T-160 (made by YASUHARA CHEMICAL CO., LTD.): terpene phenolic resin, softening point of 160°C
DS-816 (made by Harima Chemicals Group, Inc.): polymerized rosin ester, softening point of 150°C
DS-822 (made by Harima Chemicals Group, Inc.): polymerized rosin ester, softening point of 165°C

The weight average molecular weights of the components used as the styrene-butadiene-based block copolymer with the butadiene portion partially hydrogenated are shown below.
Asaprene N521 (made by Asahi Kasei Corp.): SBBS (styrene-butadiene-butylene-styrene-based block copolymer with the butadiene portion partially hydrogenated), weight average molecular weight of 150000
Tuftec P1500 (made by Asahi Kasei Corp.): SBBS (styrene-butadiene-butylene-styrene-based block copolymer with the butadiene portion partially hydrogenated), weight average molecular weight of 80000

### (Production of Adhesive Tape (Double-sided Tape))

The adhesive compositions 1 to 27 were heated to 200°C in a melter to dissolve, applied onto a cellulose-rayon non-woven fabric (DAIFUKU PAPER MFG. Co., Ltd, 5200 18 g/m²) at a thickness of 50 µm using a slot die coater (ITW Dynatec K.K), attached to a double-sided release paper, and rolled. Furthermore, the 50 µm-thick adhesive composition was likewise applied onto the surface not coated with the adhesive composition using a slot die coater (ITW Dynatec K.K). The film thickness in the present invention was measured by subtracting the film thickness of the base material from the layer thickness of the tape, and in the case of double-sided tape, by dividing that film thickness by two. A spring-type dial gauge stipulated in JIS B 7503 was used as the film thickness measuring instrument, and the measurement pressure was 20 to 60 kPa.

### (Evaluation)

The obtained adhesive compositions and adhesive tapes were evaluated as follows.

### <Viscosity at 200°C of Adhesive Composition>

Viscosity measurements were performed using a rheometer (made by Anton Paar, MCR302) with a cone plate (1°, 25 mm in diameter) at 200°C and at a shear rate of 10 (1/s)*.* The results are shown in Tables 1 and 2.

### <Adhesive Force of Adhesive Tape>

Based on JIS Z0237 "10. Adhesive Force", the adhesive force to a polypropylene resin (180° peel adhesive force) was measured under an atmosphere at 80°C. First, a 25 µm-thick PET film was attached to one surface of the double-sided adhesive tape, and the other surface of the tape was attached to a polypropylene board and pressed with a load of 2 kg. This sample was set on an autograph. After 30 minutes, the adhesive force was measured. The polypropylene board used for this measurement was a 2 mm-thick sheet of KOBE POLYSHEET (product number: PP-N-BN, made by Showa Denko Materials Co., Ltd.) punched out to 5 cm × 20 cm. The results are shown in Tables 1 and 2.

### <Holding Force of Adhesive Tape>

The holding force at 70°C was measured based on JIS Z0237 "13. Holding Force". The adhesive tape with the adhesive area of 25 mm × 25 mm was attached to an SUS plate under an atmosphere at 70°C. The load was set to 1 kg, and the time until the weight dropped was measured. The results are shown in Tables 1 and 2.

**[Table 1]**

| | | | | Example | | | | | | | | | | | | |
|---|---|---|---|---|---|---|---|---|---|---|---|---|---|---|---|---|
| Table 1 | Component | Product Name | Component | Adhesive | | | | | | | | | | | | |
| | | | | 1 | 2 | 3 | 4 | 5 | 6 | 7 | 8 | 9 | 10 | 11 | 12 | 13 |
| | Styrene-butadiene-based Block Copolymer | Asaprene N521 (Asahi Kasei) | Styrene 25wt%/Diblock 60wt%/MI2 | 50 | 25 | 24.5 | 0 | 50 | 50 | 50 | 50 | 49.5 | 50 | 50 | 49.5 | 50 |
| | | Tuftec P1500 (Asahi Kasei) | Styrene 30wt%/Diblock 65wt%/MI15 | 0 | 25 | 25 | 50 | 0 | 0 | 0 | 0 | 0 | 0 | 0 | 0 | 0 |
| | First Tackifier | Super Ester A-18 (Viscosity: 100000cp) | Special Rosin Ester | 0 | 0 | 0 | 0 | 0 | 0 | 0 | 0 | 0 | 0 | 0 | 0 | 0 |
| | | Ester Gum AT (Viscosity:20000-40000cp) | Rosin Ester | 0 | 0 | 0 | 0 | 0 | 0 | 0 | 0 | 0 | 0 | 0 | 0 | 0 |
| | | YS Resin LP (Viscosity:2000cp) | Terpene Resin Compound | 10 | 10 | 10 | **10** | 10 | 10 | 10 | 10 | 10 | 10 | 10 | 10 | 10 |
| | Second Tackifier (Softning Point: 120°C or Lower) | Alcon P-110 (ARAKAWA CHEMICAL) | Fully Hydrogenated C9 | 0 | 0 | 0 | 0 | 0 | 0 | 0 | 0 | 0 | 0 | 0 | 0 | 0 |
| | | Petrotack 90 (Tosoh) | C5/C9 | 0 | 0 | 0 | 0 | 0 | 0 | 0 | 0 | 0 | 0 | 0 | 0 | 0 |
| | | PX1150N | Terpene Resin | 20 | 20 | 20 | 20 | 20 | 20 | 28 | 20 | 20 | 12 | 20 | 20 | 20 |
| | | ESCOREZ 1310 (Exxon Mobil) | C5 | 0 | 0 | 0 | 0 | 0 | 0 | 0 | 0 | 0 | 0 | 0 | 0 | 0 |
| Adhesive Composition Blending | Third Tackifier (Softning Point: 140°C or Higher) | QUINTONE2940 (Softening Point: 141°C) ZEON | C5 Petroleum Resin | 0 | 0 | 0 | 0 | 20 | 0 | 0 | 0 | 0 | 0 | 0 | 0 | 0 |
| | | P-140 (Softening Point:140°C) ARAKAWA CHEMICAL | Hydrogenated C9 Petroleum Resin | 0 | 0 | 0 | 0 | 0 | 20 | 0 | 0 | 0 | 0 | 0 | 0 | 0 |
| | | T-145 (Softening Point:145°C) YASUHARA CHEMICAL | Terpene Phenolic Resin | 0 | 0 | 0 | 0 | 0 | 0 | 12 | 20 | 20 | 28 | 0 | 0 | 0 |
| | | T-160 (Softening Point:160°C) YASUHARA CHEMICAL | Terpene Phenolic Resin | 0 | 0 | 0 | 0 | 0 | 0 | 0 | 0 | 0 | 0 | 20 | 20 | 0 |
| | | DS-816 (Softening Point:150°C) Harima Chemicals | Polymerized Rosin Ester | 20 | 20 | 20 | 20 | 0 | 0 | 0 | 0 | 0 | 0 | 0 | 0 | 0 |
| | | DS-822 (Softening Point:165°C) Harima Chemicals | Polymerized Rosin Ester | 0 | 0 | 0 | 0 | 0 | 0 | 0 | 0 | 0 | 0 | 0 | 0 | 20 |
| | Plasticizer | DINA | Diisononyl Adipate | 0 | 0 | 0 | 0 | 0 | 0 | 0 | 0 | 0 | 0 | 0 | 0 | 0 |
| | Antioxidant | Irganox1726 | 2,4-Bis[(dodecylthio)me thyl]-6-methylphenol | 0 | 0 | 0.5 | 0 | 0 | 0 | 0 | 0 | 0.5 | 0 | 0 | 0.5 | 0 |
| Total (g) | | | | 100 | 100 | 100 | 100 | 100 | 100 | 100 | 100 | 100 | 100 | 100 | 100 | 100 |
| Property of Double-sided Tape | Viscosity at 200°C (cp) | | | 88000 | 70000 | 70000 | 54000 | 88000 | 92000 | 68000 | 75000 | 75000 | 82000 | 96000 | 96000 | 88000 |
| | Adhesive Force (N/cm) 80°C | | | 5.20 | 5.50 | 5.50 | 5.75 | 2.60 | 2.80 | 2.40 | 3.00 | 3.00 | 3.60 | 3.15 | 3.15 | 7.00 |
| | Holding Force (min) 70°C | | | 950 | 450 | 550 | 200 | 300 | 400 | 120 | 350 | 420 | 450 | 890 | 1080 | 1150 |

**[Table 2]**

| | | | | Example | | | | | | | Comparative Example | | | | | | |
|---|---|---|---|---|---|---|---|---|---|---|---|---|---|---|---|---|---|
| Table 2 | Component | Product Name | Component | Adhesive | | | | | | | Adhesive | | | | | | |
| | | | | 14 | 15 | 16 | 17 | 18 | 19 | 20 | 21 | 22 | 23 | 24 | 25 | 26 | 27 |
| | Styrene-butadiene-based Block Copolymer | Asaprene N521 (Asahi Kasei) | Styrene 25wt%/Diblock 60wt%/MI2 | 50 | 50 | 50 | 50 | 50 | 45 | 55 | 40 | 60 | 50 | 50 | 50 | 50 | 50 |
| | | Tuftec P1500 (Asahi Kasei) | Styrene 3Dwt%/Diblock 65wt%/MI15 | 0 | 0 | 0 | 0 | 0 | 0 | 0 | 0 | 0 | 0 | 0 | 0 | 0 | 0 |
| | First Tackifier | Super Ester A-18 (Viscosity: 100000cp) | Special Rosin Ester | 10 | 0 | 0 | 0 | 0 | 0 | 0 | 0 | 0 | 0 | 0 | 0 | 0 | 0 |
| | | Ester Gum AT (Viscosity:20000-40000co) | Rosin Ester | 0 | 10 | 0 | 0 | 0 | 0 | 0 | 0 | 0 | 0 | 0 | 0 | 0 | 0 |
| | | YS Resin LP (Viscosity:2000cp) | Terpene Resin Compound | 0 | 0 | 10 | 10 | 10 | 11 | 9 | 12 | 8 | 10 | 0 | 0 | 10 | 10 |
| | Second Tackifier (Softning Point: 120°C or Lower) | Alcon P-110 (ARAKAWA CHEMICAL) | Fully Hydrogenated C9 | 0 | 0 | 20 | 0 | 0 | 0 | 0 | 0 | 0 | 0 | 0 | 0 | 0 | 0 |
| | | Petrotack 90 (Tosoh) | C5/C9 | 0 | 0 | 0 | 20 | 0 | 0 | 0 | 0 | 0 | 0 | 0 | 0 | 0 | 0 |
| | | PX1150N | Terpene Resin | 20 | 20 | 0 | 0 | 0 | 22 | 18 | 24 | 16 | 8 | 20 | 30 | 0 | 40 |
| | | ESCOREZ 1310 (Exxon Mobil) | C5 | 0 | 0 | 0 | 0 | 20 | 0 | 0 | 0 | 0 | 0 | 0 | 0 | 0 | 0 |
| Adhesive Composition Blending | Third Tackifier (Softning Point: 140°C or Higher) | QUINTONE2940 (Softening Point: 141°C) ZEON | C5 Petroleum Resin | 0 | 0 | 0 | 0 | 0 | 0 | 0 | 0 | 0 | 0 | 0 | 0 | 0 | 0 |
| | | P-140 (Softening Point: 140°C) ARAKAWA CHEMICAL | Hydrogenated C9 Petroleum Resin | 0 | 0 | 0 | 0 | 0 | 0 | 0 | 0 | 0 | 0 | 0 | 0 | 0 | 0 |
| | | T-145 (Softening Point: 145°C) YASUHARA CHEMICAL | Terpene Phenolic Resin | 0 | 0 | 0 | 0 | 0 | 0 | 0 | 0 | 0 | 0 | 0 | 0 | 0 | 0 |
| | | T-160 (Softening Point: 160°C) YASUHARA CHEMICAL | Terpene Phenolic Resin | 0 | 0 | 0 | 0 | 0 | 0 | 0 | 0 | 0 | 0 | 0 | 0 | 0 | 0 |
| | | DS-816 (Softening Point:150°C) Harima Chemicals | Polymerized Rosin Ester | 20 | 20 | 20 | 20 | 20 | 22 | 18 | 24 | 16 | 32 | 20 | 20 | 40 | 0 |
| | | DS-822 (Softening Point:165°C) Harima Chemicals | Polymerized Rosin Ester | 0 | 0 | 0 | 0 | 0 | 0 | 0 | 0 | 0 | 0 | 0 | 0 | 0 | 0 |
| | Plasticizer | DINA | Diisononyl Adipate | 0 | 0 | 0 | 0 | 0 | 0 | 0 | 0 | 0 | 0 | 10 | 0 | 0 | 0 |
| | Antioxidant | Irganox1726 | 2,4-Bis[(dodecylthio)me thyl]-6-methylphenol | 0 | 0 | 0 | 0 | 0 | 0 | 0 | 0 | 0 | 0 | 0 | 0 | 0 | 0 |
| Total (g) | | | | 100 | 100 | 100 | 100 | 100 | 100 | 100 | 100 | 100 | 100 | 100 | 100 | 100 | 100 |
| Property of Double-sided Tape | Viscosity at 200°C (cp) | | | 85400 | 85000 | 98000 | 80000 | 82000 | 76000 | 98000 | 65000 | 245000 | 109000 | 80000 | 550000 | 75000 | 62000 |
| | Adhesive Force (N/cm) 80°C | | | 4.20 | 4.05 | 3.60 | 3.25 | 3.40 | 5.40 | 3.25 | 6.05 | 1.90 | 0.80 | 4.05 | 2.80 | 0.20 | 0.80 |
| | Holding Force (min) 70°C | | | 210 | 200 | 1000 | 120 | 175 | 450 | 1200 | 9 | 1200 | 12 | 5 | 5 | 1 | 4 |

### Reference Signs List

- 1:: double-sided release film
- 2:: adhesive layer
- 3:: non-woven fabric
- 4:: adhesive layer

## Claims

1. An adhesive tape comprising an adhesive layer containing an adhesive composition, wherein:
the adhesive composition contains a styrene-butadiene-based block copolymer, a first tackifier, a second tackifier, and a third tackifier;
a butadiene portion of the styrene-butadiene-based block copolymer is partially hydrogenated;
the first tackifier is at least one of a rosin ester which is liquid at 23°C and a terpene-based resin which is liquid at 23°C;
the second tackifier has a softening point of 70 to 120°C, measured in accordance with the softening point test method (ring and ball method) stipulated in JIS K5902 and JIS K2207;
the third tackifier has a softening point of 140°C or higher;
holding force of the adhesive tape at 70°C based on JIS Z0237 is 100 minutes or more; and
a melt viscosity of the adhesive composition at 200°C is 100000 mPa.s (cp) or lower, measured using a rheometer at 200°C and at a shear rate of 10 (1/s);
a content of the styrene-butadiene-based block copolymer is 45 to 55 parts by mass;
a content of the first tackifier is 5 to 15 parts by mass;
a content of the second tackifier is 10 or more parts by mass; and
a total content of the second tackifier and the third tackifier is 30 to 50 parts by mass, per 100 parts by mass of the adhesive composition.

2. The adhesive tape of Claim 1, wherein the second tackifier contains a terpene-based resin.

3. The adhesive tape of Claim 1 or 2, wherein the third tackifier contains a rosin-based resin or a terpene-based resin.

4. The adhesive tape of any one of Claims 1 to 3, wherein the adhesive tape has adhesive force at 80°C to a polypropylene resin based on JIS Z0237 is 2.40 N/cm or higher.

## Patentansprüche

1. Klebeband, umfassend eine Klebeschicht, die eine Klebstoffzusammensetzung enthält, wobei:
die Klebstoffzusammensetzung ein Blockcopolymer auf Styrol-Butadien-Basis, einen ersten Klebrigmacher, einen zweiten Klebrigmacher und einen dritten Klebrigmacher enthält;
ein Butadienanteil des Blockcopolymers auf Styrol-Butadien-Basis teilweise hydrogeniert ist;
der erste Klebrigmacher mindestens einer von einem bei 23 °C flüssigen Kolophoniumester oder einem bei 23 °C flüssigen Harz auf Terpenbasis ist;
der zweite Klebrigmacher einen Erweichungspunkt von 70 bis 120 °C aufweist, gemessen gemäß dem in JIS K5902 und JIS K2207 vorgeschriebenen Erweichungspunkttestverfahren (Ring- und Kugelverfahren);
der dritte Klebrigmacher einen Erweichungspunkt von 140 °C oder höher aufweist;
eine Haltekraft des Klebebandes bei 70 °C auf der Grundlage von JIS Z0237 100 Minuten oder mehr beträgt; und
eine Schmelzviskosität der Klebstoffzusammensetzung bei 200 °C 100000 mPa.s (cp) oder weniger beträgt, gemessen mit einem Rheometer bei 200 °C und einer Scherrate von 10 (1/s);
ein Gehalt des Blockcopolymers auf Styrol-Butadien-Basis 45 bis 55 Masseteile beträgt;
ein Gehalt des ersten Klebrigmachers 5 bis 15 Masseteile beträgt;
ein Gehalt des zweiten Klebrigmachers 10 oder mehr Masseteile beträgt; und
ein Gesamtgehalt des zweiten Klebrigmachers und des dritten Klebrigmachers 30 bis 50 Masseteile pro 100 Masseteile der Klebstoffzusammensetzung beträgt.

2. Klebeband nach Anspruch 1, wobei der zweite Klebrigmacher ein Harz auf Terpenbasis enthält.

3. Klebeband nach Anspruch 1 oder 2, wobei der dritte Klebrigmacher ein Harz auf Kolophoniumbasis oder ein Harz auf Terpenbasis enthält.

4. Klebeband nach einem der Ansprüche 1 bis 3, wobei das Klebeband eine Klebekraft bei 80 °C an einem Polypropylenharz auf der Grundlage von JIS Z0237 von 2,40 N/cm oder höher aufweist.

## Revendications

1. Ruban adhésif comprenant une couche adhésive contenant une composition adhésive, dans lequel :
la composition adhésive contient un copolymère séquencé à base de styrène-butadiène, un premier agent adhésif, un deuxième agent adhésif et un troisième agent adhésif ;
une partie butadiène du copolymère séquencé à base de styrène-butadiène est partiellement hydrogénée ;
le premier agent collant est au moins l'un des esters de colophane liquides à 23°C et une résine à base de terpène liquide à 23°C ;
le deuxième agent collant a un point de ramollissement de 70 à 120°C, mesuré selon le procédé d'essai du point de ramollissement (méthode de l'anneau et de la bille) stipulé dans les normes JIS K5902 et JIS K2207 ;
le troisième agent collant a un point de ramollissement égal ou supérieur à 140°C ;
une force de maintien de la bande adhésive à 70°C selon la norme JIS Z0237 est de 100 minutes ou plus ; et
la viscosité à l'état fondu de la composition adhésive à 200°C est inférieure ou égale à 100 000 mPa.s (cp) , mesurée à l'aide d'un rhéomètre à 200°C et à un taux de cisaillement de 10 (1/s )
la teneur du copolymère en bloc à base de styrène-butadiène est comprise entre 45 et 55 parties en masse ;
la teneur du premier agent collant est de 5 à 15 parties en masse ;
la teneur du deuxième agent collant est de 10 parties ou plus en masse ; et
la teneur totale du deuxième agent collant et du troisième agent collant est de 30 à 50 parties en masse, pour 100 parties en masse de la composition adhésive .

2. Ruban adhésif de la revendication 1, dans lequel le deuxième agent adhésif contient une résine à base de terpène.

3. Ruban adhésif de la revendication 1 ou 2, dans lequel le troisième agent adhésif contient une résine à base de colophane ou une résine à base de terpène.

4. Ruban adhésif de l'une des revendications 1 à 3, dans lequel le ruban adhésif a une force d'adhésion à 80°C à une résine de polypropylène basée sur JIS Z0237 est de 2,40 N/cm ou plus.
